# EUROPÄISCHE PATENTSCHRIFT

(11) **EP 2 803 873 B1**
(45) Veröffentlichungstag und Bekanntmachung des Hinweises auf die Patenterteilung: **12.08.2015**
(21) Anmeldenummer: 14167403.6
(22) Anmeldetag: 07.05.2014
(51) Int. Cl.: F16C 11/06

(54) **Gelenkzapfen mit einem Gelenkkopf aus Kunststoff**
Pivot stud with a pivot head of synthetic resin
Pivot à rotule avec une tête de rotule en matière plastique

(30) Priorität: 16.05.2013 DE 102013008342; 24.06.2013 DE 102013211957; 22.08.2013 DE 102013216728
(43) Veröffentlichungstag der Anmeldung: 19.11.2014
(62) Teilanmeldung aus: 14193797.9
(73) Patentinhaber: Springfix Befestigungstechnik GmbH, 73084 Salach (DE)
(72) Erfinder: Ecker, Rainer, 73033 Göppingen (DE); Gonzalez, Carlos, 89558 Böhmenkirch (DE)
(74) Vertreter: Patent- und Rechtsanwälte Ullrich & Naumann

(56) Entgegenhaltungen:
- EP-A1- 1 357 306
- EP-A2- 0 702 161
- EP-A2- 1 418 349
- DE-A1-102007 023 245
- DE-U- 1 854 243
- FR-A- 845 561
- US-A- 2 862 740
- US-A- 2 879 091

## Beschreibung

Die Erfindung betrifft einen Gelenkzapfen, insbesondere zur Sensoransteuerung in einem Fahrzeug, mit einem einen ersten Abschnitt und einen zweiten Abschnitt aufweisenden Gelenkkörper, wobei an dem ersten Abschnitt des Gelenkkörpers ein Gelenkkopf angeordnet ist, wobei der Gelenkkörper aus Metall und der Gelenkkopf aus Kunststoff hergestellt ist und wobei an dem ersten Abschnitt ein Sicherungsbereich ausgebildet ist, an dem der Gelenkkopf verdreh- und abzugssicher angeordnet ist.

Gelenkzapfen der in Rede stehenden Art sind seit Jahren aus der Praxis bekannt und werden insbesondere als Teil eines Gestänges zur Sensoransteuerung in Fahrzeugen verwendet. Dabei wird der Gelenkzapfen in einer Gelenkpfanne gehalten, um somit ein Gelenk auszubilden. Derartige Gelenke werden bspw. für Turbolader-Verstellgestänge eingesetzt.

Aufgrund dieses Einsatzgebietes sind derartige Gestänge und somit auch die Gelenkzapfen extremen Bedingungen - Wasser, Eis, Staub, Schmutz, Steine, Vibrationen, starken Temperaturschwankungen, großer Hitze - ausgesetzt. Die Gelenkzapfen bestehen dabei üblicherweise aus Metall und weisen zum Schutz gegen Korrosion eine Oberflächenbeschichtung auf. Während des Betriebs wird die Schutzschicht abgerieben, wobei dieser Verschleiß aufgrund der extremen Umgebungsbedingungen mitunter schnell auftritt. Das somit freiliegende blanke Metall beginnt zu korrodieren, was zu einer Zerstörung des Gelenkes führt.

Zur Lösung dieses Problems ist aus der EP 0 836 019 A1 vorbekannt, eine gattungsbildende Gelenkverbindung durch eine Schutzlippe derart abzuschirmen, dass Staub, Schmutz oder Feuchtigkeit nicht in die Gelenkverbindung eintritt.

Aus den Dokumenten DE 18 54 243 U, US 2 879 091 A, US 2 862 740 A, FR 845,561 A, EP 1 418 349 A2, EP 1 357 306 A1 und DE 10 2007 023 245 A1 sind jeweils Gelenkzapfen umfassend einen Gelenkkörper und einen an dem Gelenkkörper angeordneten Gelenkkopf vorbekannt.

Die EP 0 702 161 A2 zeigt einen Gelenkzapfen mit einem Gelenkkörper und einem Gelenkkopf, wobei der Gelenkkörper aus Metall und der Gelenkkopf aus Kunststoff hergestellt ist. Der Gelenkkopf ist dabei verdreh- und abzugssicher an einem Sicherungsbereich des Gelenkkörpers angeordnet.

Die DE 43 09 226 A1 zeigt eine Gelenkverbindung für einen Fahrzeugniveaugeber, bei der ein Faltenbalg vorgesehen ist, um das Gelenk vor widrigen Umgebungsbedingungen zu schützen.

Bei den bekannten Konstruktionen ist jedoch problematisch, dass diese aufwendig und damit kostenintensiv in der Herstellung sind. Ferner verschleißt sowohl ein Faltenbalg als auch eine Schutzlippe, so dass die Funktionalität dieser Schutzmaßnahmen lediglich kurzfristig gegeben ist.

Des Weiteren ist aus dem Stand der Technik vorbekannt, Gelenkzapfen aus Kunststoff herzustellen. Diese korrodieren zwar nicht, können jedoch nicht mit den benötigten Drehmomenten angezogen bzw. mit gleich hohen Querkräften wie ein Gelenkzapfen aus Stahl belastet werden. Somit stellen Gelenkzapfen aus Kunststoff keine geeignete Alternative zu Gelenkzapfen aus Stahl dar.

Der vorliegenden Erfindung liegt daher die Aufgabe zugrunde, einen Gelenkzapfen der eingangs genannten Art derart auszugestalten und weiterzubilden, dass der Gelenkzapfen mit hohen Drehmomenten und Querkräften belastbar ist und möglichst geringem Verschleiß unterliegt.

Erfindungsgemäß wird die voranstehende Aufgabe durch die Merkmale des Anspruches 1 gelöst. Danach ist der in Rede stehende Gelenkzapfen dadurch gekennzeichnet, dass an dem ersten Abschnitt mindestens eine Materialausnehmung und eine sich an die Materialausnehmung anschließende Materialerhebung ausgebildet sind, die den Sicherungsbereich definieren, und dass die Materialausnehmung aus dem ersten Abschnitt herausgeschabt ist, wobei das dadurch aufgestauchte Material die Materialerhebung bildet.

In erfindungsgemäßer Weise ist zunächst erkannt worden, dass die zugrundeliegende Aufgabe durch eine geschickte Ausgestaltung von Gelenkkopf und Gelenkkörper in überraschend einfacher Weise gelöst werden kann. Dazu ist der Gelenkkopf aus Kunststoff und der Gelenkkörper aus Metall hergestellt. Somit ist ein korrodieren des Gelenkkopfs nahezu ausgeschlossen, wobei der Gelenkzapfen aufgrund des metallischen Gelenkkörpers mit hohen Drehmomenten angezogen bzw. Querkräften belastet werden kann. Entgegen eines Vorurteils der Fachwelt ist Kunststoff per se nicht ungeeignet zum Einsatz in Gelenkzapfen. Durch die raffinierte Kombination des Gelenkkopfes aus Kunststoff mit dem Gelenkkörper aus Metall werden die Vorteile beider Werkstoffe in idealer Weise ausgenutzt. Somit ist ein stark belastbarer Gelenkzapfen realisiert, der kaum einem Verschleiß unterliegt und auch bei härtesten Umgebungsbedingungen einsetzbar ist.

In besonders vorteilhafter Weise ist der Gelenkkörper aus Stahl hergestellt und weist somit die stahlspezifischen extremen Belastbarkeiten auf. Ein weiterer Vorteil eines stählernen Gelenkkörpers besteht in den vielfältigen Bearbeitungsmöglichkeiten, die Stahl bietet. Bei dem Stahl kann es sich um vergütbaren oder nicht-vergütbaren Stahl handeln. Des Weiteren kann der Gelenkkörper aus beliebigen Metallen - bspw. Aluminium oder Niromaterial - hergestellt sein, sofern diese den spezifischen Belastungen standhalten. Als Niromaterial kann bspw. x8CrNiS 18-9, x5CrNi 18-10 oder x5CrNiMo 17-12-2 verwendet werden.

Um den Gelenkkörper noch beständiger auszugestalten, kann dieser zum Schutz gegen Korrosion zumindest teilweise oberflächenbeschichtet sein. Idealerweise ist die gesamte Oberfläche des Gelenkkörpers mit einer Schutzschicht gegen Korrosion ausgestattet.

In besonders vorteilhafter Weise ist zwischen dem ersten Abschnitt und dem zweiten Abschnitt des Gelenkkörpers ein Angriffsbereich für ein Werkzeug ausgebildet. Hierbei kann es sich bspw. um ein Sechskant handeln. Der Gelenkkörper kann bspw. aus dem Schraubenrohling einer Sechskantschraube hergestellt sein. In weiter vorteilhafter Weise kann zwischen dem ersten Abschnitt und dem zweiten Abschnitt des Gelenkkörpers eine mit einem Anschraubgegenstück korrespondierende Verdrehsicherung ausgebildet sein.

Zur einfachen Verbindung des Gelenkzapfens mit dem weiteren Gestänge einer Sensorenansteuerung kann der zweite Abschnitt ein Außengewinde aufweisen. Das Gewinde kann spanend oder spanlos gefertigt sein, bspw. in den zweiten Abschnitt eingeschnitten oder eingepresst sein. Von besonderem Vorteil ist es, wenn das Gewinde bereits vor einer etwaigen Vergütung des Gelenkzapfens gefertigt ist.

Je nachdem, um was für einen Gelenk es sich handelt, kann der Gelenkkopf die Form einer Kugel, eines Kugelabschnitts, eines Ellipsoids oder eines Ellipsoidabschnitts aufweisen. Denkbar ist jedwede Geometrie des Gelenkkopfes, die in einer mit dem Gelenkkopf korrespondierenden Gelenkpfanne passt. Des Weiteren ist denkbar, dass der Gelenkkopf an seinem dem ersten Abschnitt zugewandten Ende einen halsförmigen Bereich aufweist und sich damit im Sinne einer Schutzschicht über einen Teil des ersten Abschnitts hinweg erstreckt. Somit ist dieser ansonsten freiliegende Teil des ersten Abschnitts auf besonders einfache Weise vor Beschädigungen und Korrosion geschützt. An dieser Stelle sei darauf hingewiesen, dass der Gelenkkopf an seiner Oberfläche fertigungsbedingt eine oder mehrere Narben bzw. Grate aufweisen kann. Diese können als Fett-/Schmutzauffang dienen und dadurch die Reibung zwischen Gelenkkopf und Gelenkpfanne verringern.

In besonders vorteilhafter Weise ist der Gelenkkopf an dem ersten Abschnitt des Gelenkkörpers spritzgusstechnisch oder sintertechnisch angeformt. Durch das Spritzgießen des Gelenkkopfes kann der Abstand zwischen dem Angriffsbereich für ein Werkzeug und der Gelenkkopfmitte variiert werden, indem man die Lage des Gelenkkörpers im Spritzgusswerkzeug verändert. Hierzu müssen lediglich Wechseleinsätze unterschiedlicher Länge in das Spritzgusswerkzeug eingelegt werden. Somit können auch Gelenkköpfe mit unterschiedlichen Durchmessern an Gelenkkörpern mit gleichen Abmessungen fixiert werden, da die Lage des Gelenkkörpers im Spritzgusswerkzeug veränderbar ist.

In weiter vorteilhafter Weise ist der Gelenkkopf auf den ersten Abschnitt aufgepresst oder in den ersten Abschnitt eingebettet, so dass mit verblüffend einfachen Mitteln eine ideale Verbindung zwischen Gelenkkopf und Gelenkkörper geschaffen ist.

Um den besonderen Beanspruchungen des Gelenkkopfes Rechnung zu tragen, kann dieser aus Polyoxymethylen (POM), Polyamid (PA), Polyphthalamiden (PPA), Perfluorkautschuk (FFKM bzw. FFPM) oder Polyimiden hergestellt sein. Jeder dieser Kunststoffe kann mit zweckmäßigen Füll-, Ergänzungs- und Verstärkungsmitteln angereichert sein, um einen ideal belastbaren Gelenkkopf zu erzeugen. Als Füllstoffe können beispielsweise Verstärkungsstoffe aus Glas oder Kohlenstoff dienen. Ferner können Schmiermittel zugesetzt werden, beispielsweise Polytetrafluorethylen (PTFE), Molybdändisulfid (MoS2), Grafit oder Silikonöl. Wesentlich ist hierbei, dass der Gelenkkopf eine hohe Temperaturbeständigkeit, geringe Reibwerte, höchste Verschleißfestigkeit und gute Zähigkeit bei ausreichender Steifigkeit in der Verbindung aufweist.

In erfindungsgemäßer Weise ist an dem ersten Abschnitt des Gelenkkörpers ein Sicherungsbereich ausgebildet, an dem der Gelenkkopf verdreh- und abzugssicher angeordnet ist. Dabei ist an dem ersten Abschnitt mindestens eine Materialausnehmung und eine sich an die Materialausnehmung anschließende Materialerhebung ausgebildet. Die Materialausnehmung kann bspw. als Einschnitt oder Kerbe ausgebildet sein. Idealerweise sind mehrere Materialausnehmungen mit entsprechenden Materialerhebungen vorgesehen. Der erste Abschnitt des Gelenkkörpers kann in weiter vorteilhafter Weise rund oder eckig ausgebildet sein. Alternativ oder zusätzlich kann der erste Abschnitt - zumindest bereichsweise - hohl ausgebildet sein. Die Materialausnehmungen und Materialerhebungen können an der dadurch vorhandenen Mantelaußenfläche des hohlen ersten Abschnitts ausgebildet sein. Ferner können an der Mantelinnenfläche des hohlen ersten Abschnitts Materialerhebungen und/oder Materialausnehmungen ausgebildet sein, um dadurch eine weitere Verdreh- und Abziehsicherung zu bilden. Schließlich ist zusätzlich oder alternativ denkbar, dass die Mantelinnenfläche des ersten Abschnitts rund oder profiliert - bspw. eckig - ausgebildet ist. Um eine weitere Verdreh-/Abziehsicherung zu erhalten, kann der hohl ausgebildete erste Abschnitt an seiner Stirnseite - bspw. mit einem Stempel - gestaucht oder - bspw. mit einem Kegelstempel - aufgeweitet sein. Die sich dadurch ergebende Wulst wirkt als Hinterschneidung, an der der Gelenkkopf in idealer Weise verdreh- und abzugssicher anordenbar ist.

In weiter erfindungsgemäßer Weise ist die Materialausnehmung aus dem ersten Abschnitt herausgeschabt, wobei das dadurch aufgestauchte Material die Materialerhebung bildet. Dabei ist wesentlich, dass die Schabekräfte geringer als die Stauchkräfte des Gelenkkörpers sind, um ein Stauchen des Gelenkkörpers zu vermeiden. Durch diese konstruktive Maßnahme ist ein Gelenkzapfen angegeben, dessen erster Abschnitt derart schmal ausgebildet ist, dass der geforderte Kippwinkel von ± 20° gegenüber der Gelenkpfanne erreicht wird. Der so erzeugte Sicherungsbereich des Gelenkkörpers kann in dem gleichen Presswerkzeug gefertigt werden, in dem der Gelenkkörperrohling mit dem Gewinde bzw. des Angriffsbereichs für ein Werkzeug versehen wird. Wesentlich ist hierbei, dass die Materialausnehmung bzw. Schabung nicht zu lang und zu tief ausgebildet sein darf, da sonst Rissbildung an der Materialerhebung bzw. dem Aufwurf eintritt. Ferner darf die Materialausnehmung nicht zu kurz bzw. zu flach ausgebildet sein, da ansonsten die mechanischen Anforderungen an die Verbindung des Kunststoffes nicht erfüllt sind. Die Geometrien der Materialausnehmung/Materialausnehmungen bzw. der Materialerhebung/Materialerhebungen ergeben sich durch die maximal zulässigen Stauchkräfte des verwendeten Materials und den Einbauverhältnissen des Gelenkzapfens. Beispielsweise bei einem aus einer M6-Schraube aus vergütbarem Stahl gefertigten Gelenkkörperrohling mit einem Durchmesser des ersten Bereichs von 4 mm und einem Abstand von Gelenkkörpermitte bis zur Auflage der Angriffsbereich für ein Werkzeug von 12 mm, ist eine Materialausnehmung von 1 bis 2 mm besonders vorteilhaft. Bei einem Gelenkkörperrohling aus nichtvergütbaren Stahl mit weniger Anteil an Kohlenstoff, kann die Materialausnehmung deutlich länger ausgebildet werden, ohne dass sich Risse bilden. An dieser Stelle sei nochmals darauf hingewiesen, dass generell mehrere Materialausnehmungen mit dazu korrespondierenden Materialerhebungen vorgesehen sein können.

Schließlich ist denkbar, dass der Sicherungsbereich durch Bördeln, Drehen oder Rändeln erzeugt wird. Wesentlich ist dabei lediglich, dass der erste Abschnitt derart schmal ausgebildet ist, dass der geforderte Kippwinkel von ± 20° gegenüber der Gelenkpfanne erreicht wird. Folglich ist ein Stauchen des Gelenkkörpers zu vermeiden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: ein Ausführungsbeispiel eines erfindungsgemäßen Gelenkkörpers in einer schematischen, perspektivischen Darstellung,
- Fig. 2: in schematischer Darstellung eine Seitenansicht eines erfindungsgemäßen Gelenkzapfens,
- Fig. 3: die perspektivische Darstellung des erfindungsgemäßen Gelenkzapfens gemäß Fig. 2 und
- Fig. 4: die Draufsicht auf einen erfindungsgemäßen Gelenkzapfen.

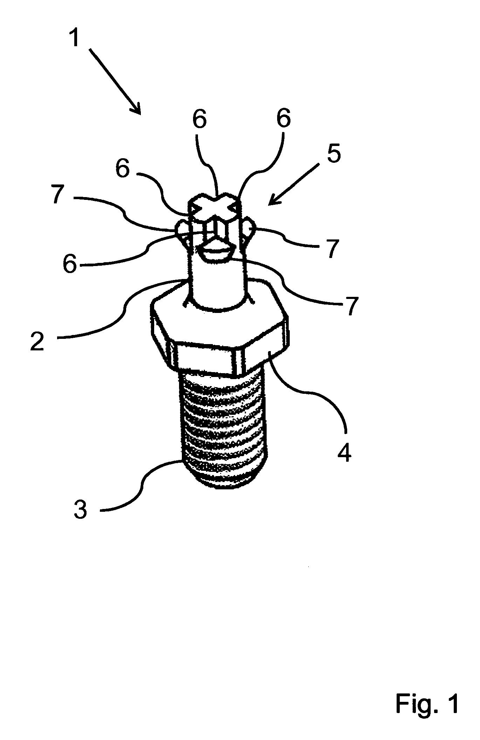

Fig. 1 zeigt ein Ausführungsbeispiel eines erfindungsgemäßen Gelenkkörpers 1 in einer schematischen, perspektivischen Darstellung. Der Gelenkkörper 1 ist aus Metall - vorzugsweise Stahl - hergestellt und weist einen ersten Abschnitt 2 und einen zweiten Abschnitt 3 auf. Zwischen dem ersten Abschnitt 2 und dem zweiten Abschnitt 3 ist ein Angriffsbereich 4 in Form eines Sechskants ausgebildet. Der zweite Abschnitt 3 weist ein Gewinde auf, so dass der Gelenkkörper 1 mit einem Sechskantschlüssel in das Gestänge einer Sensoransteuerung einschraubbar ist. Da der Gelenkkörper 1 aus Metall hergestellt ist, kann er mit hohem Drehmoment eingeschraubt werden und hält auch starken Querkräften stand.

Zur Herstellung des Gelenkkörpers 1 können gängige metrische Schrauben mit Sechskantkopf sowie einem Zusatzzapfen zur Bildung des ersten Abschnitts 2 verwendet werden.

Im ersten Abschnitt 2 des Gelenkkörpers 1 ist der Sicherungsbereich 5 vorgesehen. Der Sicherungsbereich 5 weist vier Materialausnehmungen 6 sowie sich daran anschließende Materialerhebungen 7 auf. Im Konkreten sind die Materialausnehmungen 6 in den ersten Abschnitt 2 hineingeschabt, wobei das geschabte Material die Materialerhebungen 7 bildet. Die Materialerhebungen 7 dienen als Abzugshinterschnitt für den Gelenkkopf 8. Wesentlich ist hierbei, dass die Schabung bzw. die Materialausnehmung 6 nicht zu lang bzw. zu tief ausgebildet sein darf, da sich an den Materialerhebungen 7 ansonsten Risse bilden. Ferner ist die Materialausnehmung 6 nicht zu flach bzw. zu kurz auszubilden, da ansonsten der Gelenkkopf 8 nicht ausreichend im Sicherungsbereich 5 fixiert ist.

In diesem Ausführungsbeispiel weist der zweite Abschnitt 3 und der Angriffsbereich 4 die Geometrie einer M6-Schraube auf. Der erste Abschnitt 2 weist einen Halsdurchmeter von 4 mm auf. Bei dieser Geometrie hat sich eine Länge der Materialausnehmung 6 von 1 mm als ideal herausgestellt. Die zulässige Toleranz liegt in diesem Ausführungsbeispiel bei ± 0,3 mm. Auch ist es denkbar, den zweiten Abschnitt 3, anstelle mit einem Gewinde, mit einem Nietschaft bzw. als Nietschaft auszubilden.

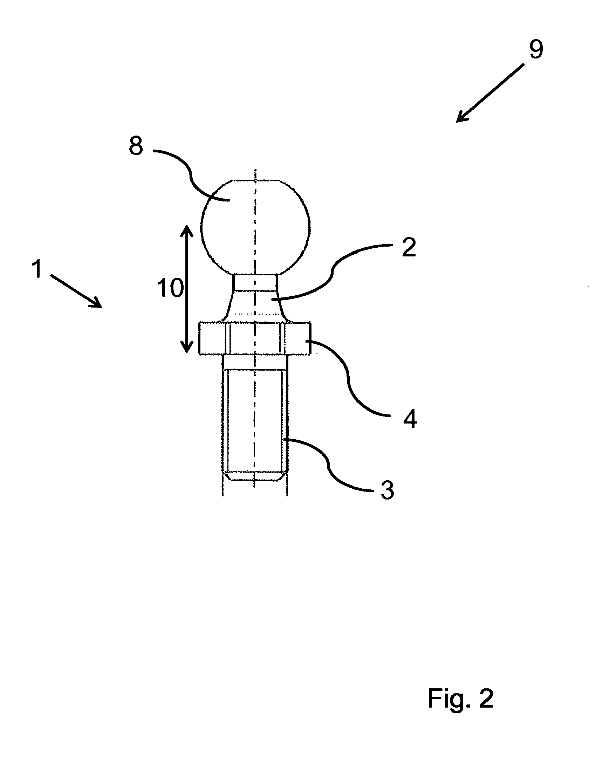

Fig. 2 zeigt eine Seitenansicht eines erfindungsgemäßen Gelenkzapfens 9 in einer schematischen Darstellung. An dem ersten Abschnitt 2 des Gelenkköpers 1 ist ein Gelenkkopf 8 angebracht. Der Gelenkkopf 8 weist die Form eines Kugelabschnitts bzw. Kugelsegments auf. In besonders vorteilhafter Weise ist der aus Kunststoff hergestellte Kugelkopf spritzgusstechnisch an den Sicherungsbereich 5 des ersten Abschnitts 2 angeformt. Um den geforderten Kippwinkel von ± 20° des Gelenkzapfens 9 in einer Gelenkpfanne zu realisieren, muss der erste Abschnitt 2 des Gelenkkörpers 1 entsprechend lang und schmal ausgebildet sein. Im hier dargestellten Ausführungsbeispiel weist der erste Abschnitt 2 einen Durchmesser von 4 mm auf. Der Abstand 10 von der Mitte des Gelenkkopfes 8 zur Auflage der Angriffsbereich 4 beträgt in diesem Ausführungsbeispiel 12 mm. Durch diese Abmessung ist der geforderte Kippwinkel des Gelenkzapfens 9 sichergestellt.

Die Figuren 1 und 2 lassen deutlich erkennen, dass der Gelenkzapfen 9 bzw. der Gelenkkörper 1 mit seinem oberen Bereich deutlich in den Gelenkkopf 8 hineinragt.

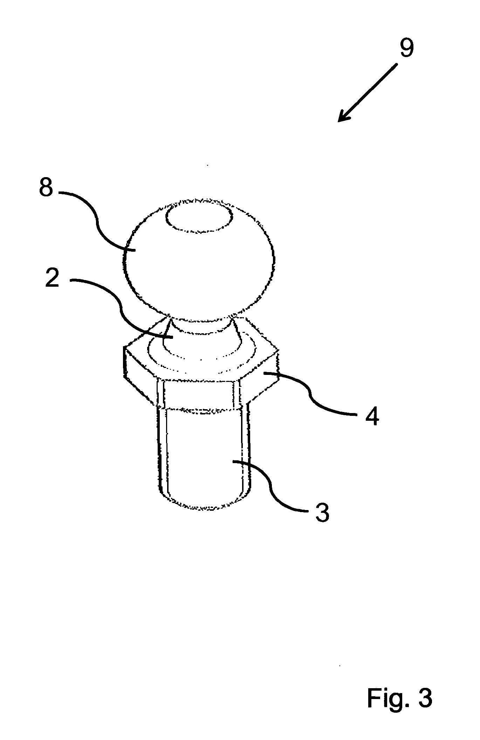

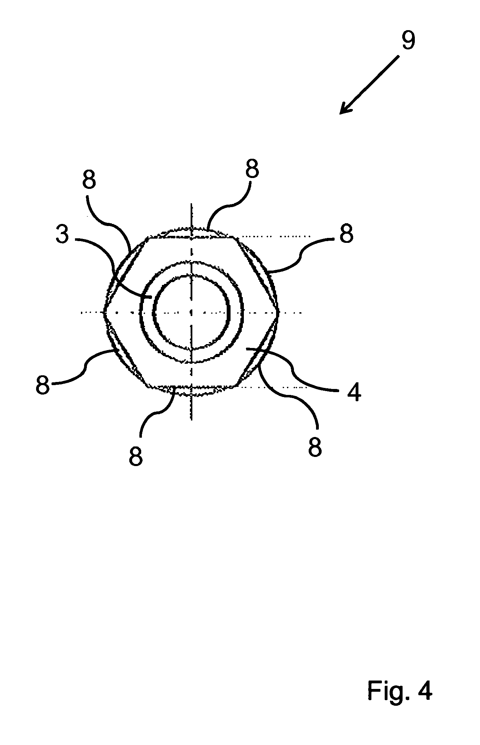

Fig. 3 zeigt in einer perspektivischen, schematischen Darstellung den erfindungsgemäßen Gelenkzapfen 9 aus Fig. 2. Fig. 4 zeigt eine Draufsicht auf den erfindungsgemäßen Gelenkzapfen 9 der Figuren 2 und 3. Zur Vermeidung von Wiederholungen sei an dieser Stelle auf die voranstehenden Ausführungen der Figuren 1 und 2 verwiesen.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel der erfindungsgemäßen Vorrichtung lediglich zur Erörterung der beanspruchten Lehre dient, diese jedoch nicht auf das Ausführungsbeispiel einschränkt.

### Bezugszeichenliste

- 1: Gelenkkörper
- 2: erster Abschnitt
- 3: zweiter Abschnitt
- 4: Angriffsbereich
- 5: Sicherungsbereich
- 6: Materialausnehmung
- 7: Materialerhebung
- 8: Gelenkkopf
- 9: Gelenkzapfen
- 10: Abstand

## Patentansprüche

1. Gelenkzapfen (9), insbesondere zur Sensoransteuerung in einem Fahrzeug, mit einem einen ersten Abschnitt (2) und einen zweiten Abschnitt (3) aufweisenden Gelenkkörper (1), wobei an dem ersten Abschnitt (2) des Gelenkkörpers (1) ein Gelenkkopf (8) angeordnet ist,
wobei der Gelenkkörper (1) aus Metall und der Gelenkkopf (8) aus Kunststoff hergestellt ist und wobei an dem ersten Abschnitt (2) ein Sicherungsbereich (5) ausgebildet ist, an dem der Gelenkkopf (8) verdreh- und abzugssicher angeordnet ist,
**dadurch gekennzeichnet, dass** an dem ersten Abschnitt (2) mindestens eine Materialausnehmung (6) und eine sich an die Materialausnehmung (6) anschließende Materialerhebung (7) ausgebildet sind, die den Sicherungsbereich (5) definieren, und dass die Materialausnehmung (6) aus dem ersten Abschnitt (2) herausgeschabt ist, wobei das dadurch aufgestauchte Material die Materialerhebung (7) bildet.

2. Gelenkzapfen nach Anspruch 1, **dadurch gekennzeichnet, dass** der Gelenkkörper (1) aus Stahl hergestellt ist.

3. Gelenkzapfen nach Anspruch 1 oder 2, **dadurch gekennzeichnet, dass** der Gelenkkörper (1) zum Schutz gegen Korrosion zumindest teilweise oberflächenbeschichtet ist.

4. Gelenkzapfen nach einem der Ansprüche 1 bis 3, **dadurch gekennzeichnet, dass** zwischen dem ersten Abschnitt (2) und dem zweiten Abschnitt (3) ein Angriffsbereich (4) für ein Werkzeug - insbesondere ein Sechskant - oder eine mit einem Anschraubgegenstück korrespondierende Verdrehsicherung ausgebildet ist.

5. Gelenkzapfen nach einem der Ansprüche 1 bis 4, **dadurch gekennzeichnet, dass** der zweite Abschnitt (3) ein Außengewinde aufweist.

6. Gelenkzapfen nach einem der Ansprüche 1 bis 5, **dadurch gekennzeichnet, dass** der Gelenkkopf (8) die Form einer Kugel, eines Kugelabschnitt, eines Ellipsoids oder eines Ellipsoidabschnitts aufweist.

7. Gelenkzapfen nach einem der Ansprüche 1 bis 6, **dadurch gekennzeichnet, dass** der Gelenkkopf (8) an dem ersten Abschnitt (2) spritzgusstechnisch oder sintertechnisch angeformt ist.

8. Gelenkzapfen nach einem der Ansprüche 1 bis 6, **dadurch gekennzeichnet, dass** der Gelenkkopf (8) auf den ersten Abschnitt (2) aufgepresst oder in den ersten Abschnitt (2) eingebettet ist.

9. Gelenkzapfen nach einem der Ansprüche 1 bis 8, dass der Gelenkkopf (8) aus Polyoxymethylen (POM), Polyamid (PA), Polyphthalamiden (PPA), Perfluorkautschuk (FFKM bzw. FFPM) oder Polyimiden hergestellt ist.

10. Gelenkzapfen nach einem der Ansprüche 1 bis 9, **dadurch gekennzeichnet, dass** die Materialausnehmung (6) als Einschnitt oder als Kerbe ausgebildet ist.

11. Gelenkzapfen nach einem der Ansprüche 1 bis 10, **dadurch gekenn zeichnet,** dass der Sicherungsbereich (5) in einem Presswerkzeug hergestellt ist.

## Claims

1. Pivot pin (9), in particular for sensor control in a vehicle, having a pivot member (1) which has a first portion (2) and a second portion (3), a pivot head (8) being arranged on the first portion (2) of the pivot member (1),
wherein the pivot member (1) is produced from metal and the pivot head (8) is produced from plastics material and wherein there is formed on the first portion (2) a securing region (5) on which the pivot head (8) is arranged to as to prevent torsion and removal,
**characterised in that** there are formed on the first portion (2) at least one material recess (6) and a material protrusion (7) adjoining the material recess (6), which define the securing region (5), and **in that** the material recess (6) is scraped from the first portion (2), the material which has been upset thereby forming the material protrusion (7).

2. Pivot pin according to claim 1, **characterised in that** the pivot member (1) is produced from steel.

3. Pivot pin according to claim 1 or claim 2, **characterised in that** the pivot member (1) is at least partially surface-coated for protection against corrosion.

4. Pivot pin according to any one of claims 1 to 3, **characterised in that** between the first portion (2) and the second portion (3) an application region (4) for a tool - in particular a hexagonal member - or a torsion prevention means which corresponds to a screwing counter-piece is constructed.

5. Pivot pin according to any one of claims 1 to 4, **characterised in that** the second portion (3) has an outer thread.

6. Pivot pin according to any one of claims 1 to 5, **characterised in that** the pivot head (8) is in the form of a ball, a ball portion, an ellipsoid or an ellipsoid portion.

7. Pivot pin according to any one of claims 1 to 6, **characterised in that** the pivot head (8) is formed on the first portion (2) by means of an injection-moulding technique or a sintering technique.

8. Pivot pin according to any one of claims 1 to 6, **characterised in that** the pivot head (8) is pressed onto the first portion (2) or embedded in the first portion (2).

9. Pivot pin according to any one of claims 1 to 8, **characterised in that** the pivot head (8) is produced from polyoxymethylene (POM), polyamide (PA), polyphthalamides (PPA), perfluoro rubber (FFKM or FFPM) or polyimides.

10. Pivot pin according to any one of claims 1 to 9, **characterised in that** the material recess (6) is constructed as an indentation or notch.

11. Pivot pin according to any one of claims 1 to 10, **characterised in that** the securing region (5) is produced in a pressing tool.

## Revendications

1. Broche articulée (9), en particulier pour la commande de capteurs dans un véhicule, ayant un corps articulé (1) présentant une première section (2) et une deuxième section (3), une tête articulée (8) étant agencée sur la première section (2) du corps articulé (1),
le corps articulé (1) étant réalisé en métal et la tête articulée (8) en plastique et une zone de fixation (5), au niveau de laquelle la tête articulée (8) est agencée d'une manière empêchant la torsion et le retrait, étant réalisée sur la première section (2),
**caractérisée en ce qu'**au moins un évidement du matériau (6) et une élévation du matériau (7) succédant à l'évidement du matériau (6) sont réalisés sur la première section (2), définissant la zone de fixation (5), et **en ce que** l'évidement du matériau (6) est creusé à partir de la première section (2), le matériau qui est refoulé par ce procédé formant l'élévation du matériau (7).

2. Broche articulée selon la revendication 1, **caractérisée en ce que** le corps articulé (1) est réalisé en acier.

3. Broche articulée selon la revendication 1 ou 2, **caractérisée en ce que** le corps articulé (1) est pourvu au moins en partie d'un revêtement de surface en guise de protection contre la corrosion.

4. Broche articulée selon l'une des revendications 1 à 3, **caractérisée en ce qu'**une zone d'engagement (4) pour un outil, en particulier une clé Allen, ou une fixation anti-torsion correspondant à une contre-pièce de vissage est réalisée entre la première section (2) et la deuxième section (3).

5. Broche articulée selon l'une des revendications 1 à 4, **caractérisée en ce que** la deuxième section (3) présente un filetage extérieur.

6. Broche articulée selon l'une des revendications 1 à 5, **caractérisée en ce que** la tête articulée (8) présente la forme d'une sphère, d'un fragment de sphère, d'un ellipsoïde ou d'un segment d'ellipsoïde.

7. Broche articulée selon l'une des revendications 1 à 6, **caractérisée en ce que** la tête articulée (8) est formée sur la première section (2) par une technique de moulage par injection ou par une technique de frittage.

8. Broche articulée selon l'une des revendications 1 à 6, **caractérisée en ce que** la tête articulée (8) est pressée sur la première section (2) ou encastrée dans la première section (2).

9. Broche articulée selon l'une des revendications 1 à 8, **caractérisée en ce que** la tête articulée (8) est réalisée en polyoxyméthylène (POM), en polyamide (PA), en polyphthalamides (PPA), en élastomère perfluorocarboné (FFKM ou FFPM) ou en polyimides.

10. Broche articulée selon l'une des revendications 1 à 9, **caractérisée en ce que** l'évidement du matériau (6) est réalisé en tant que découpe ou en tant qu'encoche.

11. Broche articulée selon l'une des revendications 1 à 10, **caractérisée en ce que** la zone de fixation (5) est réalisée dans un outil de pressage.
